# EUROPÄISCHE PATENTSCHRIFT

(11) **EP 3 330 741 B1**
(45) Veröffentlichungstag und Bekanntmachung des Hinweises auf die Patenterteilung: **13.02.2019**
(21) Anmeldenummer: 16202252.9
(22) Anmeldetag: 05.12.2016
(51) Int. Cl.: G01S 17/42, G01S 17/87, G01S 7/481, G01S 7/487, G01S 7/486, G01S 7/497, G01S 7/48

(54) **OPTOELEKTRONISCHER SENSOR UND VERFAHREN ZUR ERFASSUNG VON OBJEKTEN IN EINEM ERFASSUNGSBEREICH**
OPTOELECTRONIC SENSOR AND METHOD FOR DETECTING OBJECTS IN A SURVEILLANCE AREA
CAPTEUR OPTOÉLECTRONIQUE ET PROCÉDÉ DE DÉTECTION D'OBJETS DANS UNE ZONE DE DÉTECTION

(43) Veröffentlichungstag der Anmeldung: 06.06.2018
(73) Patentinhaber: SICK AG, 79183 Waldkirch (DE)
(72) Erfinder: Pastor, Sebastian, 79194 Gundelfingen (DE)

(56) Entgegenhaltungen:
- EP-A1- 2 362 237
- EP-A1- 2 503 357
- EP-A2- 1 972 961
- EP-A2- 2 863 176
- US-A1- 2014 055 770

## Beschreibung

Die Erfindung betrifft einen optoelektronischen Sensor und ein Verfahren zur Erfassung von Objekten in einem Erfassungsbereich nach dem Oberbegriff von Anspruch 1 beziehungsweise 9.

Bei der Objekterfassung durch einen Laserscanner überstreicht ein von einer Laserlichtquelle erzeugter Lichtstrahl mit Hilfe eines Drehspiegels periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner bewegt wird. So können auch dreidimensionale Konturen ausgemessen werden.

Laserscanner werden für Messanwendungen, aber auch wie in der DE 43 40 756 A1 in der Sicherheitstechnik zur Überwachung einer Gefahrenquelle eingesetzt. Dabei wird ein Schutzfeld überwacht, das während des Betriebs der Maschine vom Bedienpersonal nicht betreten werden darf. Erkennt der Laserscanner einen unzulässigen Eingriff in ein Schutzfeld, etwa ein Bein einer Bedienperson, so löst er eine entsprechende Absicherung aus, beispielsweise einen Nothalt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Ein weiteres Anwendungsgebiet ist die Navigation. Aufgabe des dann beispielsweise auf einem AGV (Automated Guided Vehicle) in einem Lager montierten Laserscanners ist die Erfassung der eigenen Position. Der Laserscanner orientiert sich hierbei an Targets oder Landmarken, die erfasst und ausgewertet werden, wobei drei solcher Erfassungspunkte ausreichen, die eigene X- und Y-Position innerhalb der Lagerhalle eindeutig abzuleiten. Dazu werden zum einen künstliche Reflektortargets in der Lagerhalle verteilt. Um unabhängiger von der aufwändigen Installation solcher Reflektoren zu werden, werden zunehmend auch die Messwerte von natürlichen Targets wie Wände, Säulen und dergleichen mit hinzugezogen und ausgewertet.

Eine präzise Positionsbestimmung stellt hohe Ansprüche an Winkelgenauigkeit und Abstandsmessgenauigkeit. Um ein möglichst großes Umfeld zu erfassen, sind eine hohe Reichweite und ein großer Öffnungswinkel nützlich. Herkömmliche Laserscanner können auf Reflektoren und natürlichen Targets messen. Die Signaldynamik zwischen den Extremen eines nahen Reflektors und eines fernen, schwach remittierenden natürlichen Targets ist jedoch enorm. Deshalb ist die Auslegung der Sensorik und Messauswertung ein Kompromiss, um sowohl den Empfangssignalen mit viel Leistung von Reflektoren als auch denen mit wenig Leistung von natürlichen Targets gerecht zu werden. Vermeiden lassen sich deshalb Übersteuerungseffekte mit erheblichen zusätzlichen Fehlertermen und umgekehrt eine stark begrenzte Reichweite auf dunkle, natürliche Targets nicht. Außerdem ist für eine Messung auf schwach remittierende Ziele oder in große Reichweiten nur mit hoher Sendeleistung möglich, wodurch aus Gründen der Augensicherheit die effektive Messwiederholrate und damit die Winkelgenauigkeit absinkt.

Im Stand der Technik sind verschiedene Ansätze bekannt, das Dynamikproblem zu lösen. So schlägt die EP 1 865 336 B1 vor, den Sendestrahl mittels Strahlteiler in einen Haupt- und einen Vortaststrahl zu trennen. Aus dem Messergebnis des Vortaststrahls kann die Detektionsempfindlichkeit für den Hauptstrahl eingestellt werden. Die EP 2 395 368 A1 offenbart einen Laserscanner, der jeweils für eine Messung Lichtpulse unterschiedlicher Intensität aussendet und dann in der Auswertung anhand des Empfangssignals einen der Lichtpulse auswählt. Die EP 2 182 377 A1 nutzt eine Verstärkung mit zwei Pfaden unterschiedlicher Empfindlichkeit, denen das Empfangssignal parallel zugeführt wird. Alle diese Lösungen haben Nachteile durch Zeitversatz der für einen Messwert zu berücksichtigenden Lichtpulse oder Aufwand der Implementierung.

Die US 2014/055770 A1 befasst sich mit Verfahren zur Entfernungsmessung. Dabei wird eine automatische Verstärkungsregelung für das Empfangssignal vorgeschlagen.

Aus der EP 2 503 357 A1 ist ein entfernungsmessendes Erfassungssystem für Fahrzeuge bekannt, das einen Sensor für nahe Entfernungen mit großem Sichtfeld und einen Sensor für große Entfernungen mit kleinem Sichtfeld umfasst.

Neben den bereits genannten puls- und phasenbasierten Lichtlaufzeitbestimmungen sind auch sogenannte Pulsmittelungsverfahren bekannt, beispielsweise aus der EP 1 972 961 A2. Ein entsprechender Laserscanner gemäß EP 2 469 296 A1 sendet eine Vielzahl von Einzelpulsen aus und sammelt die resultierenden Empfangspulse in einem Histogramm, das dann für die Bestimmung eines Empfangszeitpunkts statistisch ausgewertet wird. Dabei überstreicht der Abtaststrahl während des Zeitintervalls, in dem das Histogramm gefüllt wird, einen gewissen Winkelbereich, über den somit der entstehende Messwert örtlich mittelt. Durch die Mittelung wird ein besonders gutes Signal-Rausch-Verhältnis erreicht. Auch ein statistisches Verfahren wie das Pulsmittelungsverfahren ist jedoch für einen bestimmten Dynamikbereich ausgelegt.

Es ist weiterhin bekannt, den Drehspiegel des Laserscanners dadurch zu ersetzen, dass der gesamte Messkopf samt Lichtsender und Lichtempfänger rotiert. Ein solcher Scanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen des Sensors mit Energie versorgt, während die Datenübertragung drahtlos per Funk oder auf optischem Wege erfolgt. Dieser alternative Aufbau hat keinen Einfluss auf die Signaldynamik und deren Verarbeitung.

In der DE 10 2004 014 041 A1 sind in dem drehenden Messkopf drei winkelversetzte Abtastsysteme untergebracht. Die mehrfache Abtastung soll die Detektionswahrscheinlichkeit von Hindernissen wie Drähten erhöhen. Nach der EP 2 863 176 A2 rotieren mehrere Erfassungseinheiten in einer um eine Drehachse beweglichen Abtasteinheit. Die Erfassungseinheiten können verschiedene Messprinzipien verwirklichen, wobei als ein Beispiel zwei Erfassungseinheiten zur optischen Entfernungsmessung genannt sind. Das dient aber nicht dazu, den Umgang mit einem großen Dynamikbereich zu verbessern, sondern soll Redundanz für eine erhöhte Ausfallsicherheit bei Einsatz in der Absicherung von Gefahrenquellen schaffen.

Aus der EP 2 362 237 A1 ist eine Laserradarvorrichtung bekannt, die eine in Elevation und Azimut bewegliche Plattform aufweist. Darauf befindet sich eine Sende-Empfangsanordnung, die einen Sendelichtstrahl mittels Strahlteiler und Umlenkspiegel in zwei Strahlachsen aufteilt und die empfangsseitig zwei Objektive und zwei Detektoren aufweist.

Es ist daher Aufgabe der Erfindung, die Qualität der Messdaten eines gattungsgemäßen Sensors zu verbessern.

Diese Aufgabe wird durch einen optoelektronischen Sensor und ein Verfahren zur Erfassung von Objekten in einem Erfassungsbereich von Anspruch 1 beziehungsweise 9 gelöst. Der Sensor umfasst mindestens zwei Sende-Empfangseinheiten oder Messmodule jeweils mit einem Lichtsender und Lichtempfänger. Dabei muss aber nur effektiv jeweils ein eigener Lichtsender beziehungsweise Lichtempfänger vorhanden sein. Dazu zählen auch Konstruktionen, die physisch denselben Lichtsender und/oder Lichtempfänger für die verschiedenen Messmodule nutzen, etwa das Licht einer gemeinsamen Lichtquelle mit einem Strahlteiler aufteilen oder einen Lichtempfänger mit größerer Empfangsfläche in zwei unterschiedlich genutzte Bereiche aufteilen.

Die Erfindung geht nun von dem Grundgedanken aus, mit der einen Sende-Empfangseinheit empfindlicher zu messen als mit der anderen. Es gibt folglich eine empfindliche erste Sende-Empfangseinheit und eine unempfindliche zweite Sende-Empfangseinheit. Die jeweilige Empfindlichkeit hängt stark vom Sensoraufbau, der Szenerie und der Anwendung ab und ist daher nicht absolut gemeint, sondern relativ. Die erste Sende-Empfangseinheit ist damit in dem Sinne empfindlicher, dass bei sonst gleichen Bedingungen ihr Empfangspegel im Empfangssignal höher ist als derjenige der zweiten Sende-Empfangseinheit. Somit ist die erste, empfindlichere Sende-Empfangseinheit in der Lage, natürliche Ziele auch mit geringer Remission und/oder hoher Reichweite zu erfassen. Die zweite, unempfindlichere Sende-Empfangseinheit dagegen erfasst künstliche Reflektoren, aber auch natürliche weiße oder glänzende beziehungsweise nahe Ziele möglichst ohne eine die Messgenauigkeit beeinträchtigende Übersteuerung.

Die Erfindung hat den Vorteil, dass eine hohe Messgenauigkeit über einen besonders großen Dynamikbereich erzielt wird. Der einleitend erläuterte Konflikt bei einer Kompromisslösung sowohl für natürliche Targets als auch Reflektoren entfällt. Die beiden Sende-Empfangseinheiten können vielmehr unabhängig voneinander für die jeweiligen Bedürfnisse optimiert werden. Das ermöglicht eine hohe Reichweite für natürliche Targets. Für Reflektoren kann mit einer geringeren effektiven Sendeleistung gearbeitet werden, sei es durch Einzelpulse oder kumulierte Mehrfachpulse, da der Empfangspegel immer noch hoch genug ist. Deshalb werden die für eine Navigation besonders relevanten Reflektoren mit hoher Winkelmessgenauigkeit erfasst, und es kann eine entsprechend genaue Eigenposition abgeleitet werden.

Der Gedanke zweier Messmodule unterschiedlicher Empfindlichkeit lässt sich erweitern. Es sind also auch drei, vier oder noch mehr Sende-Empfangseinheiten denkbar, von denen beispielsweise mehrere empfindlich oder unempfindlich sind, oder die abgestuft für hohe bis niedrige Empfindlichkeit ausgelegt sind.

Die erste Sende-Empfangseinheit weist bevorzugt einen empfindlicheren Lichtempfänger auf als die andere Sende-Empfangseinheit. Damit ist die physische Realisierung des Lichtempfängers gemeint. Beispiele für Lichtempfänger mit aufsteigender Empfindlichkeit sind PIN-Dioden, APDs (Avalanche Photo Diode) und SPAD (Single-Photon Avalanche Diode). Die physische Realisierung des Lichtempfängers ist eine Möglichkeit, die unterschiedliche Empfindlichkeit der Sende-Empfangseinheiten zu erreichen. Im Folgenden werden weitere Möglichkeiten vorstellt, die jeweils alternativ oder kumulativ genutzt werden können.

Die erste Sende-Empfangseinheit verstärkt das Empfangssignal bevorzugt höher als die zweite Sende-Empfangseinheit. Dazu wird vorzugsweise der Verstärkungsfaktor dem Lichtempfänger nachgeordneter Verstärkerschaltungen angepasst. Bei einem Lichtempfänger mit einer Vielzahl von zusammengeschalteten SPADs ist es auch möglich, deren Vorspannung zu erhöhen, um die Auslösewahrscheinlichkeit und damit effektiv den Pegel des Empfangssignals zu erhöhen.

Die beiden Sende-Empfangseinheiten weisen bevorzugt unterschiedliche Empfangsoptiken auf. Hier wird auf optischem Wege dafür gesorgt, dass mehr oder weniger Licht den Lichtempfänger erreicht. Beispiele sind unterschiedliche Blenden, eine optische Dämpfung oder eine absichtliche Defokussierung in unterschiedlichem Maße, durch die der Lichtempfänger überstrahlt wird, wodurch dann ein Teil des Empfangslichts verloren geht.

Die erste Sende-Empfangseinheit erzeugt vorzugsweise Sendelicht mit einem kleineren Strahldurchmesser und/oder einer höheren Sendeleistung als die zweite Sende-Empfangseinheit. Dadurch wird sendeseitig für unterschiedliche Pegel des Empfangssignals gesorgt, sei es direkt über eine Leistungsanpassung oder indirekt dadurch, dass ein großer Lichtfleck entweder das Objekt im Überwachungsbereich nur teilweise trifft oder nach Remission an dem Objekt nur zu einem Teil auf den Lichtempfänger fällt.

Die Lichtsender sind vorzugsweise dafür ausgebildet, Sendelicht mit einer Vielzahl aufeinanderfolgender Einzellichtpulse auszusenden, und die Auswertungseinheit ist dafür ausgebildet, die daraufhin als Empfangssignal erzeugte Vielzahl von Empfangspulsen in einem zeitlichen Histogramm zu sammeln und das Histogramm auszuwerten, wobei für die erste Sende-Empfangseinheit Histogramme mit einer größere Anzahl von Empfangspulsen gebildet werden als für die zweite Sende-Empfangseinheit. Die Sende-Empfangseinheiten messen also mit einem Pulsmittelungsverfahren wie einleitend erwähnt, und zwar mit unterschiedlicher Mittelungstiefe. Das kann so weit gehen, dass die für die stärkeren Signale insbesondere von Reflektoren zuständige zweite Sende-Empfangseinheit gar nicht mittelt, sondern ein Einzelpulsverfahren nutzt. Dadurch wird eine besonders hohe Winkelauflösung erzielt. Umgekehrt ermöglicht eine höhere Mittelungstiefe, auch schwächere Empfangssignale noch aufzulösen, und ist daher besonders geeignet für die erste Sende-Empfangseinheit.

Der Sensor weist bevorzugt eine Sockeleinheit auf, wobei die Abtasteinheit gegenüber der Sockeleinheit beweglich ist und die Sende-Empfangseinheiten aufweist. Ein solcher Sensor ist also nach dem Prinzip des drehbaren Optik- oder Messkopfes aufgebaut. Die Sende- und Empfangseinheiten können im Winkelversatz angeordnet sein. Eine besonders bevorzugte Bauform umfasst zwei mit 180° Winkelversatz zueinander gegenüberliegende Sende-Empfangseinheiten mit entgegengesetzter Sichtrichtung. Alternativ zu einem Winkelversatz ist auch denkbar, dass Sende-Empfangseinheiten längs der Drehachse übereinander angeordnet werden. Das erfordert mehr Bauhöhe, ermöglicht aber eine Informationserfassung ohne gegenseitigen Zeitversatz etwa bei schnell bewegten Objekten. Im Falle von mehr als zwei Sende- und Empfangseinheiten können Übereinanderordnung und Winkelversatz auch kombiniert sein. Alternativ zu einem Aufbau mit drehendem Optikkopf ist aber auch eine Ausführungsform mit Drehspiegel denkbar, beispielsweise indem eine Sende- und Empfangseinheit dessen Vorder- und die andere dessen Rückseite zur periodischen Strahlablenkung nutzt.

Die Auswertungseinheit ist bevorzugt dafür ausgebildet, die Informationen der ersten Sende-Empfangseinheit und der zweiten Sende-Empfangseinheit über Objekte in dem Überwachungsbereich zu fusionieren. Dazu sind die Sende-Empfangseinheiten, bevorzugt schon mit der Herstellung, zueinander registriert, d.h. es ist eine Umrechnungsvorschrift bekannt, um Messergebnisse vergleichbar zu machen. Bei hinreichend genauer Justierung der Sende-Empfangseinheiten erschöpft sich die Registrierung in einem einfachen Offset, je nach konkreter relativer Anordnung der beiden Sende-Empfangseinheiten zeitlicher Natur, ein Winkelversatz oder eine Höhenabweichung. Das Ergebnis der Fusion sind Messdaten der Umgebung des Sensors, die sowohl Reflektoren als auch natürliche Ziele umfassen. Dabei kann die Auswertungseinheit sich jeweils für einen zuverlässigeren Messwert entscheiden, insbesondere also zu schwache oder übersteuerte Empfangssignale aussortieren. Auch eine Verrechnung ist denkbar. Der Anwender oder nachgelagerte Auswertungen sind oft an der Aufteilung durch die beiden Sende-Empfangseinheiten nicht interessiert, so dass vorzugsweise nur die fusionierten Daten ausgegeben werden. Allerdings kann es schon nützlich sein zu wissen, wo die künstlichen Landmarken liegen, da deren Position oft besonders zuverlässig bekannt ist. Dazu können die Messdaten doch getrennt ausgegeben werden, oder es wird eine Zusatzinformation mit ausgegeben, beispielsweise durch unterschiedliche Farben oder eine Beschreibungsdatei.

In vorteilhafter Weiterbildung ist eine Navigationsvorrichtung mit einem erfindungsgemäßen Sensor und mit einer Vielzahl von künstlichen Landmarken vorgesehen, die in dem Überwachungsbereich angebracht sind, wobei die Auswertungseinheit dafür ausgebildet ist, für eine Eigenpositionsbestimmung sowohl künstliche als auch natürliche Landmarken zu berücksichtigen. Die Navigation ist besonders zuverlässig, da sowohl künstliche als auch natürliche Landmarken einfließen, und beide Arten sind mit einer angepasst optimierten Sende- und Empfangseinheit erfasst, ohne dass die Messgenauigkeit wegen Kompromissen der Dynamikeinstellung leidet. Alternativ verwendet die Auswertungseinheit künstliche Landmarken für eine Eigenpositionsbestimmung und natürliche Landmarken für eine andere Aufgabe. Beispielhafte andere Aufgaben in einer derartigen Hybridlösung sind Antikollisionsanwendungen mit feststehenden oder mobilen Hindernissen und Personen, eine Vermessung der Umgebung oder dergleichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:

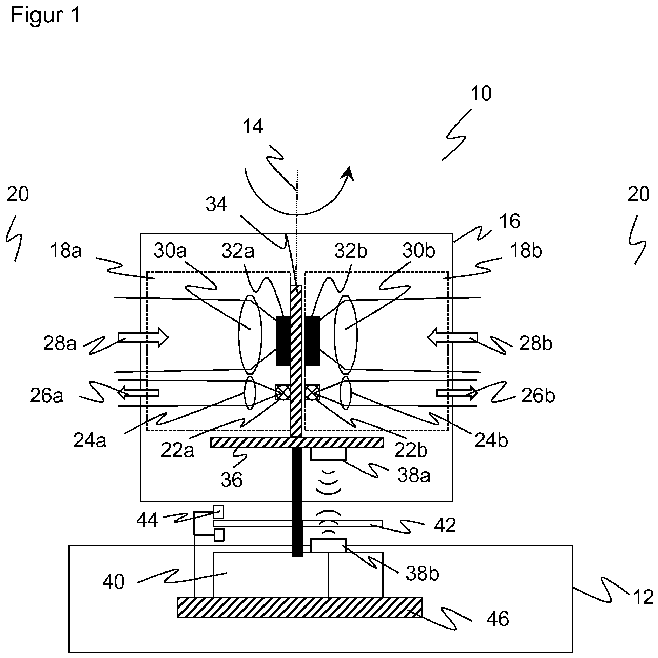

- Fig. 1: eine schematische Schnittdarstellung eines Laserscanners mit zwei Sende-Empfangseinheiten.

Fig. 1 zeigt eine schematische Schnittdarstellung durch einen Sensor 10 in einer Ausführungsform als Laserscanner, der einen ruhenden Sockel 12 und eine dagegen um eine Drehachse 14 bewegliche Abtasteinheit 16 aufweist. In der Abtasteinheit 16 sind zwei Sende-Empfangseinheiten 18a-b zur Erfassung von Objektinformationen aus einem den Sensor 10 umgebenden Überwachungsbereich 20 untergebracht, wobei die Sende-Empfangseinheiten 18a-b die Drehbewegung der Abtasteinheit 16 mitvollziehen.

Die beiden Sende-Empfangseinheiten 18a-b sind vorzugsweise zur optischen Entfernungsmessung mit einem Lichtlaufzeitverfahren ausgebildet ("TOF", Time of Flight). Dazu ist jeweils ein Lichtsender 22a-b vorgesehen, beispielsweise mit einer Laserlichtquelle, der mit Hilfe einer Sendeoptik 24a-b einen Sendelichtstrahl 26a-b erzeugt und in den Überwachungsbereich 20 aussendet. Trifft der Sendelichtstrahl 26a-b in dem Überwachungsbereich 20 auf ein Objekt, so kehrt ein entsprechender Lichtstrahl als remittiertes Licht 28a-b zu dem Sensor 10 zurück und wird von einer Empfangsoptik 30a-b auf einen Lichtempfänger 32a-b gebündelt und dort in ein elektrisches Empfangssignal gewandelt.

Die Lichtsender 22a-b und Lichtempfänger 32a-b sind auf Vorder- und Rückseite einer gemeinsamen Elektronikkarte 34 vorgesehen, die zentral und senkrecht zu den optischen Achsen der Sende-Empfangseinheiten 18a-b angeordnet ist. Statt der gemeinsamen Elektronikkarte 34 können auch separate Elektronikkarten verwendet werden. Eine weitere Elektronikkarte 36 ist mit der gemeinsamen Elektronikkarte 34 verbunden und senkrecht zu der Drehachse 14 angeordnet. Diese weitere Elektronikkarte 36 weist eine mitbewegte Schnittstelle 38a für drahtlose Datenübertragung beziehungsweise Energieversorgung auf oder ist damit verbunden.

Die Abtasteinheit 16 mit ihren Elementen wird von einem Motor 40 in dem Sockel 12 in Bewegung versetzt, insbesondere eine kontinuierliche Drehbewegung um die Drehachse 14. Dadurch tasten beide Sende-Empfangseinheiten 18a-b den umlaufenden Überwachungsbereich 20 ab. Eine Winkelmesseinheit, die in dem gezeigten Ausführungsbeispiel eine mitdrehende Codescheibe 42 und eine abtastende Lichtschranke 44 aufweist, bestimmt die jeweilige Winkelstellung der Abtasteinheit 16.

In dem Sockel 12 ist weiterhin eine Schnittstelle 38b vorgesehen, die in drahtloser Verbindung mit der Schnittstelle 38a der Abtasteinheit 16 steht und den Datenaustausch beziehungsweise die Energieversorgung sicherstellt. Die Schnittstelle 38a-b hat einen Versatz zur zentralen Drehachse 14, was aber in erster Linie darstellungsbedingt und in der Praxis möglich, aber nicht unbedingt vorteilhaft ist, weil sich so die Verbindungslinie mit der Drehbewegung verändert. Außerdem weist der Sockel 12 nochmals mindestens eine Elektronikkarte 46 auf. Die Elektronikkarten 34, 36 und 46 sind untereinander direkt oder über die Schnittstellen 38a-b verbunden und stehen symbolisch für die in beliebiger Weise auf ruhenden Sockel 12, mitbewegte Abtasteinheit 16 und Sende-Empfangseinheit 18a-b verteilbare Steuer- und Auswertungsfunktionalität. Auch die Anordnung der Elektronikkarten 34, 36, 46 ist rein beispielhaft zu verstehen, und es kann ebenso auf einige dieser Elektronikkarten 34, 36, 46 verzichtet werden, wie dass zusätzliche Elektronikkarten eingesetzt werden. Jedoch kann es vorteilhaft sein, zumindest die eng den Messdaten der Sende-Empfangseinheiten 18a-b 18b verbundenen Auswertungen möglichst sensornah, also in der Abtasteinheit 16 oder sogar teilweise in den Sende-Empfangseinheiten 18a-b zu implementieren sowie den Datenverkehr über die Schnittstelle 38a-b zur Bandbreitenbegrenzung möglichst gering zu halten.

Mit Hilfe des Empfangssignals der Sende-Empfangseinheiten 18a-b, d.h. von deren Lichtempfängern 32a-b, wird nun vorzugsweise mit einem beispielsweise puls- oder phasenbasierten Lichtlaufzeitverfahren die Distanz zu einem angetasteten Objekt gemessen. Dabei sind die beiden Sende-Empfangseinheiten 18a-b unterschiedlich optimiert, weisen nämlich eine unterschiedliche Empfindlichkeit auf. Dadurch kann insbesondere mit der einen Sende-Empfangseinheit 18a der Abstand zu einem Reflektor, mit der anderen Sende-Empfangseinheit der Abstand zu einem natürlichen Target gemessen werden. So wird die Abstandsmessgenauigkeit verbessert, da in der weniger empfindlich messenden Sende-Empfangseinheit 18b keine oder nur geringe Übersteuerungseffekte auftreten, und die empfindlicher messende Sende-Empfangseinheit 18a ist in der Lage, auch schwach remittierende und/oder weit entfernte Objekte zu erfassen. Außerdem ist für die Erfassung von Reflektoren in der weniger empfindlich messenden Sende- Empfangseinheit 18b bei einem Pulsverfahren eine höhere Pulswiederholrate und damit Winkelgenauigkeit möglich, da die einzelnen Pulse vergleichsweise schwach bleiben können. Damit kann die Augensicherheit eingehalten werden, und durch die gezielte Reflexion ergibt sich dennoch genug Pegel des Empfangssignals.

Es gibt verschiedene Möglichkeiten, die unterschiedliche Empfindlichkeit der beiden Sende-Empfangseinheiten 18a-b zu erreichen, die einzeln oder in Kombination eingesetzt werden können. Dazu zählen optische, elektronische und mechanische Modifikationen sowohl auf Sende- als auch auf Empfangsseite.

Beispielsweise ist denkbar, Lichtempfänger 32a-b unterschiedlicher Technologie einzusetzen, wie relativ unempfindliche PIN-Dioden, empfindlichere APDs oder sogar auf Einzelphotonen sensitive SPADs. Eine weitere Stellschraube bietet der Verstärkungsfaktor einer Verstärkerschaltung, die zwischen Lichtempfänger 32a-b und Auswertung angeordnet ist. Optisch kann durch unterschiedliche Blenden, aber auch Linsen mit unterschiedlicher Fokussierung der Lichtanteil des remittierten Lichts 28a-b verändert werden, der tatsächlich auf den Lichtempfänger 32a-b trifft. Beispiele für sendeseitige Modifikationen sind ein kleinerer Sendespot, insbesondere erneut mit Hilfe von Blenden oder Linsen, oder eine kleinere Sendeleistung.

Die Abstandsbestimmung kann auch in einem Pulsmittelungsverfahren erfolgen, wie es einleitend kurz erläutert wurde und ausführlich der dort genannten EP 2 469 296 A1 entnommen werden kann. Dabei wird eine Folge von Sendepulsen ausgesandt, wieder empfangen und in einem Histogramm gesammelt, wobei dann das Histogramm das auszuwertende Empfangssignal ist. Hierbei kann die Mittelungstiefe in den beiden Sende-Empfangseinheiten 18a-b unterschiedlich gewählt werden, also die Anzahl von Einzelpulsen, die einem Histogramm und damit einer Messung zugrunde liegt. So lässt sich über die Mittelungstiefe eine höhere effektive Empfindlichkeit einstellen. Da die Einzelpulse in der Bewegung der Abtasteinheit 16 ausgesandt werden, wird ein Histogramm über einen gewissen Winkelbereich gesammelt, der mit der Mittelungstiefe wächst. Deshalb wird eine höhere Mittelungstiefe und damit Empfindlichkeit mit einer geringeren Winkelauflösung erkauft. Die weniger empfindliche Sende-Empfangseinheit 18b kann mit einer nur geringen Mittelungstiefe über wenige Lichtpulse bis hin zu einem Einzelpulsverfahren arbeiten. Dadurch wird die Winkelauflösung erhöht und die effektiv abtastende Spotgröße reduziert. Ein Vorteil einer Anpassung der Sende-Empfangseinheiten 18a-b über die Mittelungstiefe ist, dass dies nur eine Änderung der Auswertung ist, die leicht verändert werden kann, sogar vor Ort zur Anpassung an die Anwendung oder die momentanen Umgebungsbedingungen, und die auch einen Umbau oder eine Weiterentwicklung bestehender Sensoren sehr einfach macht.

Da die jeweilige Winkelstellung einer Messung der Sende-Empfangseinheiten 18a-b über die Winkelmesseinheit 42, 44 bekannt ist, stehen mit Distanz und Winkel nach einer Drehung der Abtasteinheit 16 Polarkoordinaten aller Objektpunkte in dem umgebenden Überwachungsbereich 20 zur Verfügung. Die Objektpunkte können beispielsweise separat für jede Sende-Empfangseinheit ausgegeben werden. Alternativ werden sie zuvor fusioniert. Dazu wird insbesondere jeweils nur der Objektpunkt behalten, der von dem besser ausgesteuerten der Empfangssignale der beiden Sende-Empfangseinheiten 18a-b stammt. Es ist aber auch möglich, die beiden Empfangssignale gemeinsam auszuwerten, beispielsweise gemessene Entfernungen zu einem Objektpunkt zu mitteln, insbesondere dann, wenn das Empfangssignal weder deutlich übersteuert ist noch praktisch schon im Rauschen untergeht.

Figur 1 zeigt nur ein Ausführungsbeispiel des Sensors 10, das in vielerlei Aspekten variiert werden kann. Die Sende-Empfangseinheiten 18a-b sind hier biaxial aufgebaut, also mit parallel zueinander ausgerichteten optischen Achsen im Sendepfad und im Empfangspfad. Stattdessen kann jeder andere von einstrahligen Systemen oder Laserscannern bekannte Aufbau verwendet werden, wie beispielsweise mit einem Strahlteiler oder einem Lichtsender, der im Strahlengang des Lichtempfängers angeordnet ist und ihn zu einem kleinen Teil verdeckt.

Die Sende-Empfangseinheiten 18a-b haben in Figur 1 einen gegenseitigen Winkelversatz von 180°. Das bedeutet, dass zu einem Zeitpunkt Informationen aus verschiedenen Winkelsektoren des Überwachungsbereichs 20 erfasst werden. Über die Winkelmesseinheit 42, 44 sind jedoch die jeweiligen Dreh- oder Winkelstellungen der Sende-Empfangseinheiten 18a-b bekannt, so dass die Informationen einander im Anschluss korrekt zugeordnet werden können. Der Winkelversatz von 180° ist vorteilhaft, weil der Bauraum optimal ausgenutzt wird, aber nicht darauf festgelegt. Die Sende-Empfangseinheiten 18a-b können auch übereinander angeordnet sein. Weiterhin sind Ausführungsformen denkbar, in denen mehr als zwei Sende-Empfangseinheiten vorgesehen sind, die dann im Winkelversatz und/oder übereinander angeordnet werden. Diese Sende-Empfangseinheiten können dann in zwei oder mehr Empfindlichkeitsklassen unterteilt sein.

Die Ausrichtung der Sende-Empfangseinheiten 18a-b orthogonal zur Drehachse 14 ist ebenfalls vorteilhaft, aber nicht zwingend, vor allem wenn mehr als zwei Sende-Empfangseinheiten durch unterschiedliche Verkippung einen größeren Raumbereich erfassen als eine einzige Scanebene. Auch eine 3D-Abtastung durch dynamische Änderung der Verkippung ist vorstellbar. Schließlich sind auch Ausführungsformen möglich, in denen die Sende-Empfangseinheiten 18a-b nicht oder jedenfalls nur teilweise in der Abtasteinheit 16 rotieren. Die periodische Abtastung erfolgt dann beispielsweise über einen Drehspiegel, insbesondere durch Ausnutzung von dessen Vorder- und Rückseite.

## Patentansprüche

1. Optoelektronischer Sensor (10) zur Erfassung von Objekten in einem Überwachungsbereich (20), insbesondere Laserscanner, der mindestens eine erste Sende-Empfangseinheit (18a) und eine zweite Sende-Empfangseinheit (18a) mit jeweils einem Lichtsender (22a-b) zum Aussenden von Sendelicht (26a-b) und einen Lichtempfänger (32a-b) zum Erzeugen eines Empfangssignals aus dem von Objekten in dem Überwachungsbereich (20) remittierten Licht (28a-b), eine Sockeleinheit (12), eine gegenüber der Sockeleinheit (12) um eine Drehachse (14) bewegliche Abtasteinheit (16) mit den Sende-Empfangseinheiten (18a-b)zur periodischen Abtastung des Überwachungsbereichs (20) durch die Sende-Empfangseinheiten (18a-b) und eine Auswertungseinheit (36, 46) zur Erfassung von Informationen über die Objekte anhand der Empfangssignale aufweist, wobei die erste und zweite Sende-Empfangseinheit (18a-b) zueinander mit 180° Winkelversatz gegenüberliegend mit entgegengesetzter Sichtrichtung angeordnet sind, insbesondere orthogonal zu der Drehachse (14), **dadurch gekennzeichnet, dass** die erste Sende-Empfangseinheit (18a) für eine empfindlichere Detektion ausgebildet ist als die zweite Sende-Empfangseinheit (18b), so dass die erste Sende-Empfangseinheit (18a) in der Lage ist, auch schwach remittierende und/oder weit entfernte Objekte zu erfassen und in der zweiten Sende-Empfangseinheit (18b) keine oder nur geringe Übersteuerungseffekte auftreten.

2. Sensor (10) nach Anspruch 1,
wobei die erste Sende-Empfangseinheit (18a) einen empfindlicheren Lichtempfänger (32a) aufweist als die andere Sende-Empfangseinheit (18b).

3. Sensor (10) nach Anspruch 1 oder 2,
wobei die erste Sende-Empfangseinheit (18a) das Empfangssignal höher verstärkt als die zweite Sende-Empfangseinheit (18b).

4. Sensor (10) nach einem der vorhergehenden Ansprüche,
wobei die beiden Sende-Empfangseinheiten (18a-b) unterschiedliche Empfangsoptiken (30a-b) aufweisen, insbesondere unterschiedliche Blenden und/oder Fokussierungen.

5. Sensor (10) nach einem der vorhergehenden Ansprüche,
wobei die erste Sende-Empfangseinheit (18a) Sendelicht (26a) mit einem kleineren Strahldurchmesser und/oder einer höheren Sendeleistung erzeugt als die zweite Sende-Empfangseinheit (18b).

6. Sensor (10) nach einem der vorhergehenden Ansprüche,
wobei die Lichtsender (22a-b) dafür ausgebildet sind, Sendelicht (26a-b) mit einer Vielzahl aufeinanderfolgender Einzellichtpulse auszusenden und die Auswertungseinheit (36, 46) dafür ausgebildet ist, die daraufhin als Empfangssignal erzeugte Vielzahl von Empfangspulsen in einem zeitlichen Histogramm zu sammeln und das Histogramm auszuwerten, wobei für die erste Sende-Empfangseinheit (18a) Histogramme mit einer größeren Anzahl von Empfangspulsen gebildet werden als für die zweite Sende-Empfangseinheit (18b).

7. Sensor (10) nach einem der vorhergehenden Ansprüche,
wobei die Auswertungseinheit (36, 46) dafür ausgebildet ist, die Informationen der ersten Sende-Empfangseinheit (18a) und der zweiten Sende-Empfangseinheit (18b) über Objekte in dem Überwachungsbereich (20) zu fusionieren.

8. Navigationsvorrichtung mit einem Sensor (10) nach einem der vorhergehenden Ansprüche und mit einer Vielzahl von künstlichen Landmarken, die in dem Überwachungsbereich (20) angebracht sind, wobei die Auswertungseinheit (36, 46) dafür ausgebildet ist, für eine Eigenpositionsbestimmung sowohl künstliche als auch natürliche Landmarken zu berücksichtigen oder künstliche Landmarken für eine Eigenpositionsbestimmung und natürliche Landmarken für eine andere Aufgabe zu verwenden.

9. Verfahren zur Erfassung von Objekten in einem Überwachungsbereich (20),
wobei von einer ersten Sende-Empfangseinheit (18a) und einer zweiten Sende-Empfangseinheit (18b) jeweils Sendelicht (26a-b) ausgesandt, aus dem von Objekten in dem Überwachungsbereich (20) remittierten Licht (28a-b) ein jeweiliges Empfangssignal erzeugt und das Empfangssignal zur Erfassung von Informationen über die Objekte ausgewertet wird, wobei der Überwachungsbereich (18a-b) mit dem Sendelicht (26a-b) periodisch abgetastet wird, indem eine bewegliche Abtasteinheit (16) mit den Sende-Empfangseinheiten (18a-b) gegenüber einer Sockeleinheit (12) um eine Drehachse (14) bewegt wird, wobei die erste und zweite Sende-Empfangseinheit (18a-b) zueinander mit 180° Winkelversatz gegenüberliegend mit entgegengesetzter Sichtrichtung angeordnet sind, insbesondere orthogonal zu der Drehachse (14), **dadurch gekennzeichnet, dass** die erste Sende-Empfangseinheit (18a) empfindlicher detektiert als die zweite Sende-Empfangseinheit (18b), so dass die erste Sende-Empfangseinheit (18a) in der Lage ist, auch schwach remittierende und/oder weit entfernte Objekte zu erfassen und in der zweiten Sende-Empfangseinheit (18b) keine oder nur geringe Übersteuerungseffekte auftreten.

## Claims

1. An optoelectronic sensor (10) for detecting objects in a monitoring region (20), in particular a laser scanner, comprising at least a first transmission and reception unit (18a) and a second transmission and reception unit (18a) each having a light transmitter (22a-b) for transmitting transmission light (26a-b) and a light receiver (32a-b) for generating a reception signal from the remitted light (28a-b) remitted by objects in the monitoring region (20), a base unit (12), a movable scanning unit (16) which is movable relative to the base unit (12) about an axis of rotation (14) and has the transmission and reception units (18a-b) for periodically scanning the monitoring area (20) by the transmission and reception units (18a-b), and an evaluation unit (36, 46) for detecting information about the objects using the reception signals, wherein the first and second transmission and reception units (18a-b) are arranged opposite one another with 180° angular offset and opposite viewing direction, in particular orthogonal to the axis of rotation (14),
**characterized in that** the first transmission and reception unit (18a) is configured for a more sensitive detection than the second transmission and reception unit (18b), so that the first transmission and reception unit (18a) is also capable of detecting weakly remitting and/or distant objects and no or only slight overmodulation effects occur in the second transmission and reception unit (18b).

2. The sensor (10) according to claim 1,
wherein the first transmission and reception unit (18a) has a more sensitive light receiver (32a) than the other transmission and reception unit (18b).

3. The sensor (10) according to claim 1 or 2,
wherein the first transmission and reception unit (18a) amplifies the received signal with greater gain than the second transmission and reception unit (18b).

4. The sensor (10) according to one of the preceding claims,
wherein the two transmission and reception units (18a-b) have different receiving optics (30a-b), in particular different apertures and/or focusing.

5. The sensor (10) according to one of the preceding claims,
wherein the first transmission and reception unit (18a) generates transmission light (26a) with a smaller beam diameter and/or a higher transmission power than the second transmission and reception unit (18b).

6. The sensor (10) according to one of the preceding claims,
wherein the light transmitters (22a-b) are configured to transmit transmission light (26a-b) with a plurality of successive individual light pulses and the evaluation unit (36, 46) is configured to accumulate the plurality of reception pulses generated as a reception signal in a temporal histogram and to evaluate the histogram, wherein histograms with a larger number of reception pulses are formed for the first transmission and reception unit (18a) than for the second transmission and reception unit (18b).

7. The sensor (10) according to one of the preceding claims,
wherein the evaluation unit (36, 46) is configured to merge the information about objects in the surveillance area (20) of the first transmission and reception unit (18a) and the second transmission and reception unit (18b).

8. A navigation apparatus comprising a sensor (10) according to one of the preceding claims and a plurality of artificial landmarks arranged in the monitoring area (20), wherein the evaluation unit (36, 46) is configured to take into account both artificial and natural landmarks for self-positioning or to use artificial landmarks for self-positioning and natural landmarks for another task.

9. A method for detecting objects in a monitoring region (20), wherein transmission light (26a-b) is transmitted by each of a first transmission and reception unit (18a) and a second transmission and reception unit (18b), a respective reception signal is generated from the remitted light (28a-b) remitted by objects in the monitoring region (20), and the reception signals are evaluated for detecting information about the objects, the monitoring region (18a-b) being periodically scanned with the transmission light (26a-b) by moving a movable scanning unit (16) with the transmission and reception units (18a-b) relative to a base unit (12) about an axis of rotation (14), wherein the first and second transmission and reception units (18a-b) are arranged opposite one another with 180° angular offset to one another and with opposite viewing direction, in particular orthogonal to the axis of rotation (14),
**characterized in that** the first transmission and reception unit (18a) detects more sensitively than the second transmission and reception unit (18b), so that the first transmission and reception unit (18a) is also capable of detecting weakly remitting and/or distant objects and no or only slight overmodulation effects occur in the second transmission and reception unit (18b).

## Revendications

1. Capteur optoélectronique (10) pour détecter des objets dans une zone à surveiller (20), en particulier scanneur laser, comportant au moins une première unité d'émission/réception (18a) et une seconde unité d'émission/réception (18a) ayant chacune un émetteur de lumière (22a - b) pour émettre une lumière d'émission (26a - b) et un récepteur de lumière (32a - b) pour générer un signal de réception à partir de la lumière (28a - b) réémise par des objets dans la zone à surveiller (20), une unité formant socle (12), une unité de balayage (16) pourvue des unités d'émission/réception (18a - b) et mobile autour d'un axe de rotation (14) par rapport à l'unité formant socle (12) pour le balayage périodique de la zone à surveiller (20) par les unités d'émission/réception (18a - b), et une unité d'évaluation (36, 46) pour acquérir des informations relatives aux objets à l'aide des signaux de réception,
dans lequel la première et la seconde unité d'émission/réception (18a - b) sont agencées avec un décalage angulaire de 180° en regard l'une de l'autre avec des directions d'observation opposées, en particulier orthogonalement à l'axe de rotation (14),
**caractérisé en ce que** la première unité d'émission/réception (18a) est réalisée pour une détection plus sensible que celle de la seconde unité d'émission/réception (18b), de sorte que la première unité d'émission/réception (18a) est capable de détecter également des objets faiblement réémettant et/ou éloignés, et que dans la seconde unité d'émission/réception (18b) il n'y a pas d'effets de saturation ou seulement des effets de saturation faibles qui apparaissent.

2. Capteur (10) selon la revendication 1, dans lequel la première unité d'émission/réception (18a) présente un récepteur de lumière (32a) plus sensible que celui de l'autre unité d'émission/réception (18b).

3. Capteur (10) selon la revendication 1 ou 2, dans lequel la première unité d'émission/réception (18a) amplifie le signal de réception plus haut que la seconde unité d'émission/réception (18b).

4. Capteur (10) selon l'une des revendications précédentes, dans lequel les deux unités d'émission/réception (18a - b) présentent différentes optiques de réception (30a - b), en particulier différents diaphragmes et/ou différentes focalisations.

5. Capteur (10) selon l'une des revendications précédentes, dans lequel la première unité d'émission/réception (18a) génère de la lumière d'émission (26a) avec un diamètre de rayon plus petit et/ou avec une puissance d'émission plus élevée que celui/celle de la seconde unité d'émission/réception (18b).

6. Capteur (10) selon l'une des revendications précédentes, dans lequel les émetteurs de lumière (22a - b) sont réalisés pour émettre de la lumière d'émission (26a - b) avec une multitude d'impulsions de lumière uniques successives, et l'unité d'évaluation (36, 46) est réalisée pour recueillir dans un histogramme temporel la multitude d'impulsions de réception générée alors en tant que signal de réception et pour évaluer l'histogramme, et pour la première unité d'émission/réception (18a), des histogrammes sont formés avec un nombre d'impulsions de réception plus élevé que celui pour la seconde unité d'émission/réception (18b).

7. Capteur (10) selon l'une des revendications précédentes, dans lequel l'unité d'évaluation (36, 46) est réalisée pour fusionner les informations, relatives à des objets dans la zone à surveiller (20), de la première unité d'émission/réception (18a) et de la seconde unité d'émission/réception (18b).

8. Dispositif de navigation comportant un capteur (10) selon l'une des revendications précédentes et une multitude de repères artificiels qui sont disposés dans la zone à surveiller (20), dans lequel l'unité d'évaluation (36, 46) est réalisée pour prendre en compte aussi bien des repères artificiels que des repères naturels pour une détermination de la propre position, ou bien pour utiliser des repères artificiels pour une détermination de la propre position et pour utiliser des repères naturels pour une autre tâche.

9. Procédé pour détecter des objets dans une zone à surveiller (20), dans lequel une première unité d'émission/réception (18a) et une seconde unité d'émission/réception (18b) émettent chacune une lumière d'émission (26a - b), un signal de réception respectif est généré à partir de la lumière (28a - b) réémise par des objets dans la zone à surveiller (20), et le signal de réception est évalué pour acquérir des informations relatives aux objets, la zone à surveiller (18a - b) est balayée périodiquement avec la lumière d'émission (26a - b) par déplacement d'une unité de balayage mobile (16) pourvue des unités d'émission/réception (18a - b) autour d'un axe de rotation (14) par rapport à une unité formant socle (12),
la première et la seconde unité d'émission/réception (18a - b) sont agencées avec un décalage angulaire de 180° en regard l'une de l'autre avec des directions d'observation opposées, en particulier orthogonalement à l'axe de rotation (14),
**caractérisé en ce que** la première unité d'émission/réception (18a) réalise une détection plus sensible que celle de la seconde unité d'émission/réception (18b), de sorte que la première unité d'émission/réception (18a) est capable de détecter également des objets faiblement réémettant et/ou éloignés, et que dans la seconde unité d'émission/réception (18b) il n'y a pas d'effets de saturation ou seulement des effets de saturation faibles qui apparaissent.
